(19) Europäisches Patentamt
European Patent Office
Office européen des brevets

(11) **EP 3 594 488 B1**

(12) **EUROPEAN PATENT SPECIFICATION**

(45) Date of publication and mention of the grant of the patent:
**28.04.2021  Bulletin 2021/17**

(51) Int Cl.:
*F03B 13/18* *(2006.01)*     *E02B 3/06* *(2006.01)*

(21) Application number: **19185446.2**

(22) Date of filing: **10.07.2019**

(54) **MULTI-DIRECTIONAL, MULTI-FREQUENCY WAVE ATTENUATOR DEVICE BETWEEN TWO FLUIDS HAVING DIFFERENT DENSITIES**

MULTI-DIREKTIONALE, MULTI-FREQUENZ-DÄMPFUNGSVORRICHTUNG ZWISCHEN ZWEI FLÜSSIGKEITEN MIT UNTERSCHIEDLICHEN DICHTEN

DISPOSITIF ATTENUATEUR D'ONDES MULTI-DIRECTIONNELLES ET MULTI-FRÉQUENCES ENTRE DEUX FLUIDES AYANT DES DENSITÉS DIFFÉRENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2018  IT 201800007142**

(43) Date of publication of application:
**15.01.2020  Bulletin 2020/03**

(73) Proprietor: **Universita' Degli Studi di Torino 10124 Torino (IT)**

(72) Inventors:
• **ONORATO, Miguel**
  **10025 Pino Torinese (TO) (IT)**
• **DE LILLO, Filippo**
  **14100 Asti (IT)**
• **BOFFETTA, Guido**
  **10132 Torino (IT)**
• **TOSELLI, Francesco**
  **12016 Peveragno (CN) (IT)**
• **BOSIA, Federico**
  **10131 Torino (IT)**
• **KRUSHYNSKA, Anastasiia**
  **10156 Torino (IT)**
• **PUGNO, Nicola Maria**
  **38122 Trento (IT)**
• **MINIACI, Marco**
  **84044 Albanella (SA) (IT)**

(74) Representative: **Metroconsult Srl Via Sestriere, 100 10060 None (TO) (IT)**

(56) References cited:
WO-A1-2013/029012     WO-A2-2010/082033
US-A- 3 022 632     US-A- 3 628 334
US-A1- 2011 299 927

## Description

Field of the invention

The present invention relates to techniques for attenuating waves forming on the discontinuity surface between two fluids characterized by a different density, e.g. air and water.

Unlike solutions aimed at wave energy conversion, the invention, since it is only directed to energy absorption, can be much simpler and less costly in terms of installation and maintenance.

Background art

Many solutions and patents exist in the literature which propose methods for wave energy dissipation and conversion.

Although such two problems (attenuation and conversion) have several points in common, the substantial difference in the respective goals leads to the adoption of different strategies.

In general, the devices designed for conversion of wave energy into electric energy (Wave Energy Converters, WEC) must provide for methods for transmission of mechanical energy towards traditional generators (alternators), or for direct transduction, e.g. by means of piezoelectric transducers.

As regards the solutions aimed at energy conversion, it is necessary to take into account the interference among the various devices and to design the system geometry with a view to maximizing the power output of each device. As regards those devices specifically proposed for wave motion suppression, many of them consist of continuous barriers, whether partially or totally submerged, or floating bodies constituting a direct obstacle against the propagation of surface waves.

US 3,628,334 relates to a breakwater system incorporating a plurality of uniquely formed floats adapted to ride partially submerged in the path of incoming waves in a manner so as to intercept, break up and smooth out the waves so as to preclude the creation of a beach destroying undertow and pounding wave action. The breakwater consists of a series of hollow floats, normally arranged in two rows with the floats alternating therein. Each of the floats, in the nature of an enlarged ball having internal ballast so as to maintain the ball partially submerged, is anchored to the ocean bottom by an elongated flexible chain or cable which enables the float to maintain its partially submerged position through the full range of tides experienced at the particular location.

For example, document US 6,102,616 generally relates to wave control equipment, and more particularly to a device for intercepting and dissipating waves approaching boat docks and marinas. In particular, the system described in such document extends higher above the water surface than the expected height of the waves to be dissipated. Moreover, the system is designed to have a width greater than the width of the wavefront to be dissipated. Document US 3,188,813 describes a device for attenuation of waves propagating in liquids, such as, for example, waves generated in the sea, in lakes or in other large water basins. The proposed device consists of a floating structure constituted by a corrugated membrane anchored to the seabed. As a reference, the authors indicate dimensions of tens or hundreds of square metres of covered fluid surface. Moreover, said device is of the directional type, in that it damps waves with a direction of propagation defined by the corrugation of the membrane.

Furthermore, document US 4,712,944 describes a device and a method for dissipating the energy of sea waves, wherein the attenuator device is selectively disposed to interfere with and break a wavefront in the sea. In particular, the attenuator device is shaped as a buoy or an inflatable device, and may have valves necessary for either allowing the fluids to flow through the floating members or retaining them therein.

Finally, document US 4,048,802 describes a device for forming a floating barrier in order to reduce or eliminate the kinetic energy of water waves. In particular, this document describes an anchored floating barrier comprising a plurality of cylindrical members with circular wings appearing above the water surface, connected to one another by a flexible cable or rigid connection means. As they break against the barrier, the waves generate secondary waves in the opposite direction, thus reducing the kinetic energy of the primary ones.

It is clear that devices of this kind pose environmental and landscape-related problems, since they are visible on the surface and presumably have a great impact on aquatic fauna and navigation.

In contrast with these solutions, different proposals exist wherein the bodies offering resistance to the wave occupy a substantial portion of the water column.

For example, document US 4,264,233 describes a device for protecting coasts from the erosion activity of sea waves, wherein the attenuator consists of one or more rows of submerged top-shaped buoyant members anchored to the bottom. In particular, such members are provided with multiple paddle-like lateral arms to attenuate the wave motion by creating turbulence in the water and dissipating the energy of the waves.

Document US 4,130,994 describes a device for forming a floating barrier or breakwater made up of a series of buoyant disks arranged in directions parallel and perpendicular to the coastline, at different depths. In particular, such members are shaped as flexible ropes anchored to the seabed, along which horizontally-pivoted buoyant disks are arranged at regular distances in order to eliminate, or at least substantially reduce, the coast erosion effect caused by wave action.

A solution US 3,022,632 is also known in the art, which describes a device consisting of floating bodies anchored to the bottom. This document describes a system relying on the conversion of the wave energy into elastic energy of the floating body, which is a deformable bag supposed to act like an air bubble. Each installed unit is made up of various buoys, held at increasing depth, the idle volume of which decreases with depth. The operating mechanism of this solution involves, therefore, interaction with the mean current and with a significant portion of the fluid volume, but not with the surface wave dynamics.

WO 2013/029012 describes a system for power capturing from surface waves on large bodies of water, like the oceans, which represent a concentrated form of solar energy. Power capture is achieved by coupling the motion of oscillating substructures, such as buoys, to power-takeoff (PTO) subsystems controlled by a common controller implementing a feedback control strategy. The power capture is optimized via coordinated control of multiple PTO subsystems used in wave-energy-converter (WEC) devices, including when the wave motion is stochastic. Multiple PTO subsystems under coordinated control are used by several categories of WEC systems, including individual point absorbers, line absorbers, surface absorbers and arrays thereof.

Another document describing an interesting prior-art solution is US 3,487,645. The device is formed by a submerged body consisting of a cylinder extending parallel to the water surface and perpendicular to the direction of propagation of the waves.

Wave damping occurs through transfer of the kinetic energy of the waves to the oscillatory motion of the device. Because it has to be installed in a direction perpendicular to a specific direction of propagation of the waves, this is a device capable of damping waves coming from one direction only.

Furthermore, among the devices designed to convert wave energy into electric energy (WEC - Wave Energy Converters), the solutions described in US 6,229,225, US 6,392,314 and US2003/0193197 should be taken into consideration. Of course, these solutions comprise a transducer for electric energy generation.

WO 2010/082033 describes a wave energy transformation device comprising an array of members connected together to form a structure having a substantially hexagonal geometry. The array has link members, nodes and absorbers and the relative motion of at least some of the members of the array, as caused by the energy of wave motion in a medium to which the array is coupled, is convertible to another form of energy. The device is suitable for generating electrical energy from sea waves.

The devices designed for energy conversion generally do not take into consideration their possible utility for coast protection, nor do they consider the wave motion damping/suppressing effect resulting from such conversion.

Only seldom do the authors mention, as a secondary useful effect, coast protection; one example is document US 7,042,112 B2.

Object and summary

A need is therefore felt for solutions that will allow overcoming the above-mentioned drawbacks.

The solution proposed herein exploits a geometry specifically designed for complete absorption by the system of the waves propagating on the surface between two fluids. The proposed solution exploits device interaction, which is an advantageous element of the invention, thus making it possible, for example, to maximize the suppression of specific wavelengths by optimizing the distance between the oscillators.

A further object of the present invention relates to the environmental impact of damping systems, and in this respect the solution provides for using a substantially "invisible" system, since the bodies are always positioned under the surface, while the only impact on the submarine environment is due to the presence of the anchorage, similarly to a buoy system.

Moreover, the great modularity of the proposed solution allows introducing the ecological sustainability factor into the system optimization process, particularly in the choice of the size and mass of the floats and of the distance between them.

It is a further object of the present invention to make the system as insensitive and indifferent as possible to the direction of propagation of the waves, thus making the direction of propagation largely unimportant.

Furthermore, the solution proposed herein offers the additional advantage that, in the event of an off-course error, should a boat collide with the system proposed herein, the individual floats will constitute much less important obstacles, since they can be easily moved out of the way by the hull, with limited damage to the boat and to the system. The solution proposed herein allows overcoming the drawbacks of prior-art techniques by means of a device according to claim 1.

The solution proposed herein concerns a multidirectional, wave attenuator device comprising a square grid of inverted pendulums immersed in a fluid or liquid, wherein each inverted pendulum of the grid ends into a spherical mass and is anchored to the seabed through a retaining system. The spherical mass has a lower density than the fluid or liquid, so that the retaining system is constantly under tension, and the inverted pendulums are arranged to form the grid by selecting the distances between and dimensions of the pendulums in such a way as to absorb the waves. The parameters are selected in such a way that the natural oscillation frequency of the pendulum corresponds to the frequency of the waves, so as to create a resonance phenomenon that will damp the waves.

Brief description of the drawings

Further features and advantages of the invention will be illustrated in the following detailed description, which is provided merely by way of non-limiting example with reference to the annexed drawings, wherein:

- Figure 1 shows one example of an immersed inverted pendulum, ending into a spherical mass and anchored to the seabed;
- Figure 2 shows an example in which a series of four inverted pendulums are arranged in succession along the direction of propagation of the wave;
- Figure 3 shows, by way of non-limiting example, an isometric view of a device composed of, for example, a grid of 6 x 12 inverted pendulums for protecting a coastline;
- Figure 4 shows an exemplary top view of the inverted pendulums, highlighting the positioning of each pendulum with a different pitch, $a_1$ and $a_2$, in the two directions of the grid;
- Figure 5 shows, by way of example, a configuration that is different from the one shown in Figure 4;
- Figures 6 and 7 show two graphs based on an equation that describes the natural frequency of oscillation of a pendulum.

Detailed description

The following description will illustrate various specific details useful for a deep understanding of some examples of one or more embodiments. The embodiments may be implemented without one or more of such specific details or with other methods, components, materials, etc. In other cases, some known structures, materials or operations will not be shown or described in detail in order to avoid overshadowing various aspects of the embodiments. Any reference to "an embodiment" in this description will indicate that a particular configuration, structure or feature described in relationship with the embodiment is comprised in at least one embodiment. Therefore, the phrase "an embodiment" and other similar phrases, which may be present in different parts of this description, will not necessarily be all related to the same embodiment. Furthermore, any particular configuration, structure or feature may be combined in one or more embodiments as deemed appropriate.

The references below are therefore used only for simplicity's sake, and do not limit the protection scope or extension of the various embodiments.

In various embodiments, the device or system described herein aims at attenuating the waves propagating on the discontinuity surface between two fluids characterized by different densities, such as, for example, air and water (among others).

The wave type considered herein is gravity waves: such oscillations have a wavelength $\lambda$ ranging from a few centimetres to hundreds of metres, with a dependence on water depth H.

They are, for example, those forming on the sea surface under the action of the wind or any other disturbance (e.g. generated by the passage of a boat or an object falling into the water).

In some cases, the presence of waves may cause considerable damage: let us think, for example, of harbours or regions where wave-induced coastal erosion results in the disappearance of beaches, with devastating consequences on the ecosystem and on tourist economy.

Gravity waves may also be generated on the surface of liquids within containers subject to external oscillations. On an oil tanker or a tank truck, for example, continuous oscillation and the resulting wave amplification may lead to transport problems.

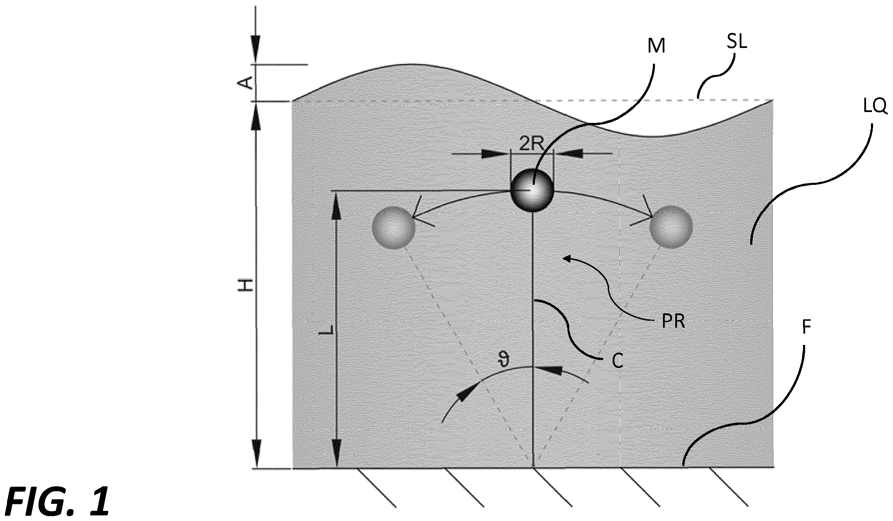

In particular, Figure 1 shows an example of an immersed inverted pendulum PR, ending into a spherical mass M, anchored to the seabed F through a rope, a cable or a chain C of length L, made of unspecified material.

The spherical mass M has a lower density than water; therefore, the cable C is constantly under tension. Therefore, the mass M is a hollow sphere that can be partially filled with a liquid, e.g. water, for changing its mean density as desired and modulating its fundamental oscillation frequency according to specific requirements.

As indicated in Figure 1, the spherical mass M of radius R is immersed in a liquid of depth H. On the interface between air and water, a wave of amplitude A propagates. In addition to possessing potential energy that is proportional to the square of its amplitude A, the wave also has kinetic energy EK, which is proportional to the square of the velocity at which the water is moving below the surface (it is in fact well known that water particles, in the presence of a wave, move and describe in first approximation circular orbits).

Therefore, when the wave passes, part of its energy will be transferred to the spherical mass M, which, being anchored to the seabed or bottom of the basin F, will start to oscillate, describing arcs of circumference of radius L, at an angle $\theta$ relative to the vertical. Because of friction with water, the spherical mass M will subsequently yield energy to the water as turbulent kinetic energy, which will then be dissipated as heat. As a whole, therefore, there will be a reduction in the energy of the wave.

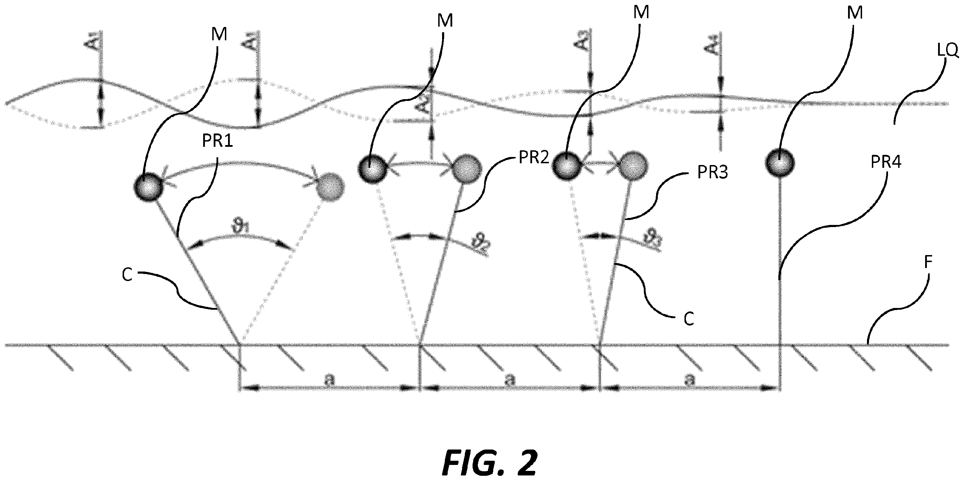

Figure 2 also shows an example in which a series of four inverted pendulums $PR_1$, $PR_2$, $PR_3$ and $PR_4$ are arranged in succession at a distance "a" from each other along the direction of propagation of the wave (from left to right in Figure 2).

The pendulums $PR_1$, $PR_2$, $PR_3$, in the order in which they are hit by the wave, will oscillate at an angle $\theta_1$, then $\theta_2$, then $\theta_3$, with $\theta_1 > \theta_2 > \theta_3$. In the case illustrated in Figure 2, wherein it is assumed that the wave is completely absorbed by the first three pendulums $PR_1$, $PR_2$, $PR_3$, the angle of oscillation of the rightmost last pendulum $PR_4$ will be zero.

As the wave, which initially has an amplitude $A_1$, reaches the subsequent pendulums, its amplitude will gradually decrease to $A_2$, $A_3$, with $A_3 < A_2 < A_1$, finally reaching an approximately null amplitude ($A_4$ in the case

of Figure 2) .

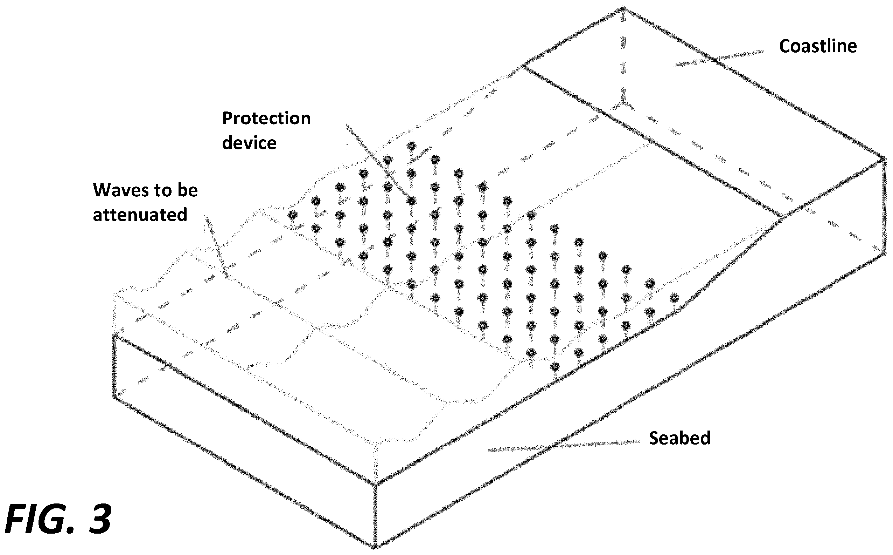

Figure 3 shows an isometric view of a device composed of, by way of non-limiting example, a grid of 6 x 12 inverted pendulums for protecting a coastline.

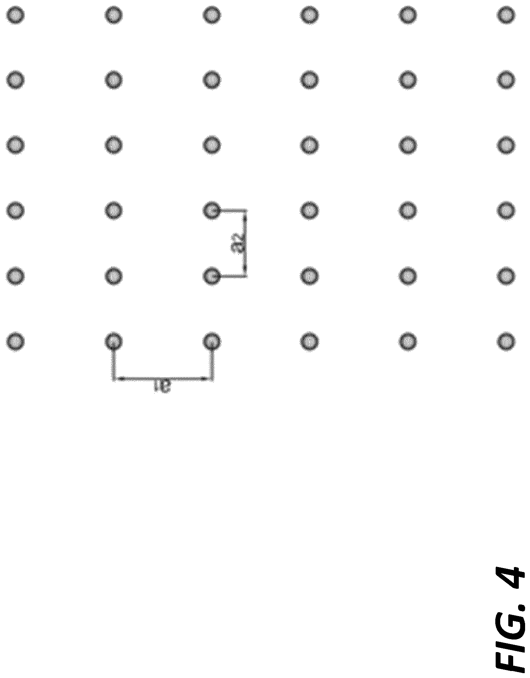

In this example, the waves come from the open sea. Thanks to the device, the waves are attenuated before they can reach the coast and initiate a beach erosion process. Figure 4 shows an exemplary top view of the inverted pendulums, according to an example not part of the invention, highlighting the positioning of each pendulum with a different pitch, $a_1$ and $a_2$, in the two directions of the grid.

Prior to positioning the inverted pendulums, in fact, it turns out to be particularly important to study the climatic conditions of the area; this means that it is possible, based on accessible historical data, to reconstruct the most probable weather and sea conditions. This study allows estimating the most likely wavelength of the waves in that area. According to these parameters, an optimization procedure based on a numerical simulation of the wave equations will lead to obtain the most appropriate distances $a_1$ and $a_2$ that will maximize energy attenuation.

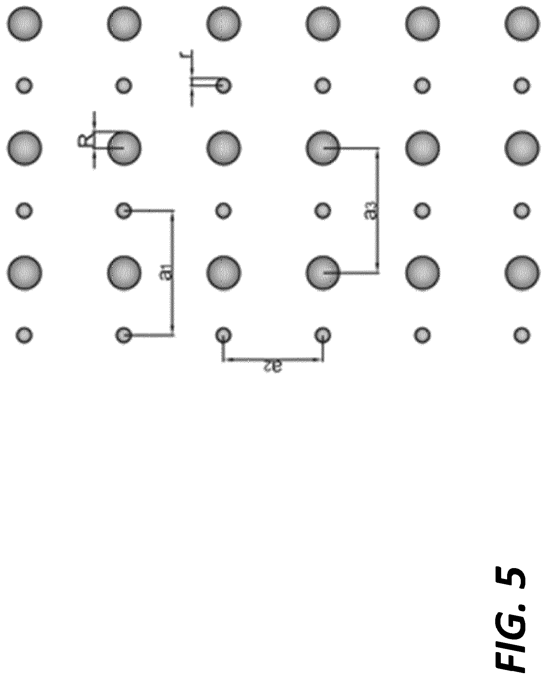

Finally, Figure 5 shows, still by way of non-limiting example, an embodiment, not part of the invention, that is different from and alternative to the one shown in Figure 4.

In this case, two sets of spherical masses of radius R and r, respectively, are positioned at distances $a_1$, $a_2$ and $a_3$ as shown in Figure 5. This configuration turns out to be particularly adequate in the presence of waves characterized by different wavelengths.

As will be explained hereinafter, different masses have different oscillation frequencies, which can attenuate waves having different frequencies and therefore different wavelengths.

The basic idea of the device DIS or system SIS proposed herein is to cause the energy En of the waves to be absorbed (thus reducing the amplitude of the waves themselves) by a set of "inverted pendulums" PR immersed in a fluid or liquid LQ and arranged at a certain distance from each other.

As illustrated in Figure 2, the pendulums PR are mutually arranged, in the absence of any stress, at a distance equal to the distance designated as "a". As can be seen in Figure 2, the cables of the various inverted pendulums PR are disposed on the seabed F at a distance "a".

The distance between the different pendulums, in addition to being a parameter useful for controlling the dynamics of the system, is also useful to ensure that such elements will not get entangled together when the liquid LQ is very agitated. As far as the construction of a single inverted pendulum PR is concerned, let us consider a spherical mass M made of a material having a mean density that is lower than the density of the fluid or liquid LQ in which the spherical mass M is immersed (e.g. a wholly or partially hollow sphere S containing air). Let us assume that the mass M is connected to a cable, a chain, a rope, a line or another retaining system C, which is anchored, by means of a dead weight or another fixed or movable anchorage system Z, to the bottom of the sea, a lake, a water basin or a tank containing the liquid LQ. The anchorage system Z may comprise a system (e.g. a winch) for winding the retaining system C, which allows controlling the actual length L of the retaining system C. According to Archimedes' law, said spherical mass M will undergo an upward thrust. In fact, any body that is partially or wholly submerged in a fluid (liquid or gas) undergoes a vertical thrust in the upward direction, the intensity of which is equal to the weight of the fluid volume displaced by the body.

Let us now assume that the cable or chain C has a length L such that the spherical mass M is proximal to the surface, but completely immersed in the fluid LQ in idle or no-wave conditions. In the absence of waves, the centre of the spherical mass M is approximately located at few centimetres from the free surface.

If the spherical mass M is moved from the position of equilibrium, it will start to oscillate at a frequency FREQ, dependent on the length L of the cable or chain C and on the mass M of the sphere. In first approximation, the natural oscillation frequency of a pendulum is

$$FREQ = 2\pi\sqrt{\left(\frac{V\rho}{m} - 1\right)\frac{g}{L}},$$

where V is the volume of the mass $m$, $p$ is the density of the liquid, g is the acceleration of gravity.

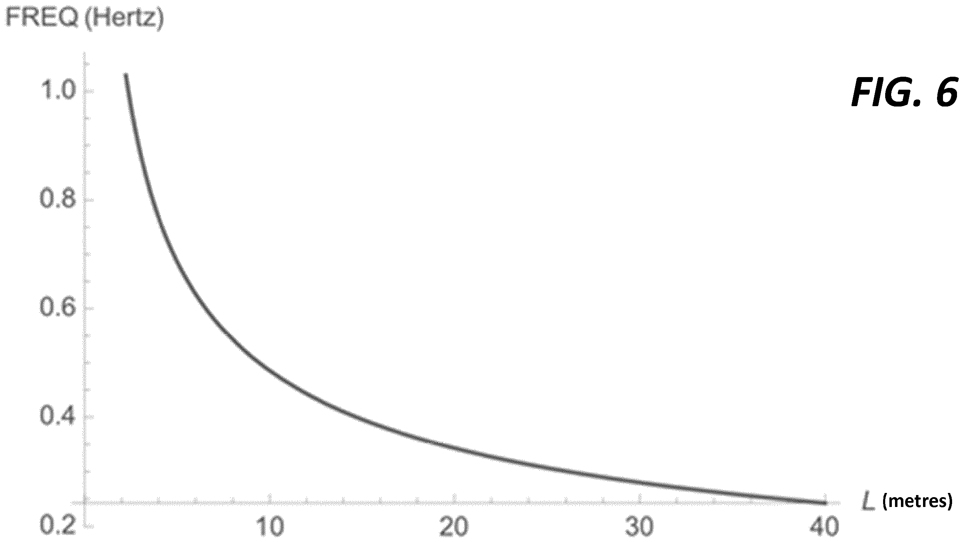

Figure 6 shows a graph based on the above equation, indicating the oscillation frequency FREQ in Hertz on the axis of ordinates and the length L in metres of the cable or chain C on the axis of abscissas.

The graph has been built by considering, by way of example, a sphere mass M of 50 Kg, a sphere radius R of 0.5 m and water as a fluid, $p$=1000 Kg/m$^3$. As can be noticed in the graph, the frequencies FREQ involved range from 0.1 Hz to 1 Hz. These are the typical wave frequencies in seas like the Mediterranean Sea.

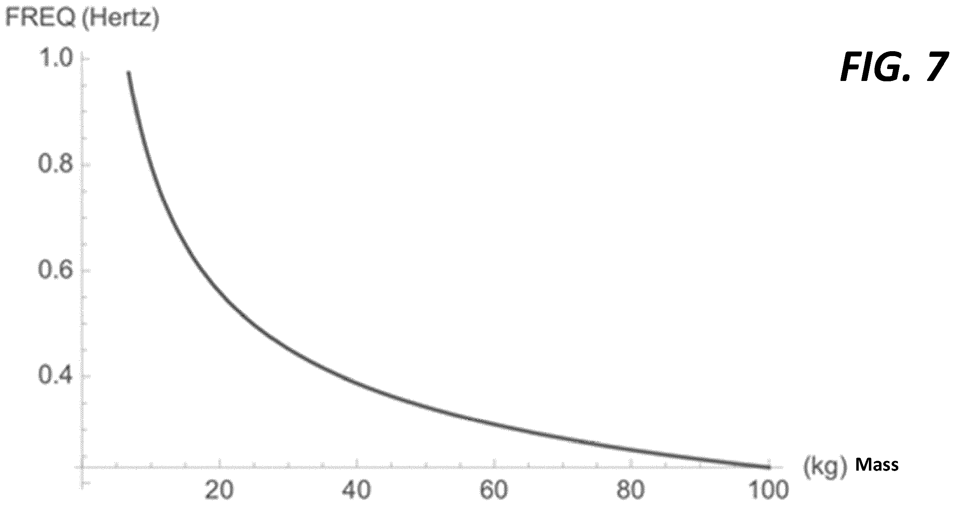

Given the depth H of the liquid LQ and the corresponding length of the cable or chain C, it is possible to change the natural oscillation frequency FREQ of the spherical mass M by changing its mean density (the radius of the sphere being equal, it is sufficient to change the mass of the sphere). In Figure 7, the natural oscillation frequency of an inverted pendulum is calculated as a function of the mass of the sphere expressed in kilograms, for a length L of the cable C of 20 m.

Note that the use of masses of the order of ten kilograms leads to frequencies comparable to those which are typical of the waves in the Mediterranean Sea.

Any pendulum, when initially moved away from its position of equilibrium, will oscillate freely at a natural oscillation frequency.

After a certain number of oscillations, due to friction with the fluid LQ, it will stop in its position of equilibrium. When a pendulum is externally forced, it may oscillate. According to the forced/damped pendulum theory, the pendulum will absorb the forcing energy more efficiently the closer the forcing frequency is to the natural oscillation frequency FREQ of the pendulum. For each system, in fact, there is a curve known as resonance curve, which expresses how much energy is absorbed by the pendulum as a function of the forcing frequency.

Said curve shows a peak where the forcing frequency equals the natural oscillation frequency of the pendulum.

Said curve also has a width at half height that is directly proportional to the friction force due to the fact that the pendulum is inserted in a fluid.

The waves propagating on the surface of a fluid or liquid LQ are characterized by a certain wavelength $\lambda$ (distance between two successive ridges), with which an oscillation frequency FREQonde is associated.

As far as sea waves are concerned, which are generated by the wind, such frequency may depend on the sea distance over which the wind is blowing and on the intensity of the wind. These waves operate as an externally applied force for the inverted pendulum.

In fact, if the frequency FREQonde of the surface waves is close to the frequency FREQ at which the above-described "inverted pendulum" PR oscillates, there will be a resonance phenomenon according to which the pendulum PR will start to oscillate, thus subtracting energy from the waves and damping them.

The energy of the pendulum is damped through friction with water; in this specific case, the pendulum will move, thereby creating a turbulent wake, the kinetic energy of which will be dissipated as heat.

The above description has illustrated the principle of operation of the device disclosed herein.

If such an individual device, i.e. the single inverted pendulum PR, is replicated several times and arranged into a grid RET, a wave damping system SIST will be obtained.

In particular, if the grid RET is chosen with a pitch between the pendulums (a1 in a first direction and a2 in the perpendicular direction) shorter than the wavelength $\lambda$ of the propagating waves, a collective effect may result, so that the waves will be attenuated to a greater extent.

In particular, it is known that a regular arrangement of diffractive elements like the pendulums described herein, known in the literature as "phononic crystal", produces multiple reflection effects that become constructive when the wavelength approximates their spacing.

However, waves in a container (or in a controlled basin) not necessarily always have the same frequency (sea waves may have very different frequencies, depending on their origin), and it is therefore necessary for the system SIST to be able to absorb the energy of waves with different frequencies FREQ1, FREQ2, FREQ3....

This is possible because also whole multiples of the wavelength are constructively reflected by the grid. Besides, both of the above-described wave energy absorption mechanisms can be exploited, i.e. the resonance effects of the individual inverted pendulums, or the constructive wave reflection effects of the periodic grid.

Both mechanisms contribute to damping the waves, and can be adjusted to make the barrier effective at different frequencies.

For example, different spacings can be used within the grid, or spherical masses M of different density M1, M2, M3 or different size M10, M20, M30 can be alternated in the grid RET of "inverted pendulums" PR, so as to vary the resonance frequencies and be able to absorb a broader range of frequencies.

As an implementation example, let us consider a square grid RET, i.e. having pitches a1=a2. It must be underlined that rectangular or even hexagonal grids are not to be excluded. For a square grid, it is estimated that the appropriate pitch is approximately one fourth of the wavelength $\lambda$ of the incident waves, i.e. a1=a2=$\lambda$/4. Such a grid is composed of Nf rows parallel to the coastline to be protected, and extends for at least two wavelengths.

Therefore, given an extension E of the system in the direction perpendicular to the coastline, the number of rows is indicatively equal to Nf= E/a2=E/($\lambda$/4). If one chooses to cover an extension E equal to two wavelengths, then Nf=8. The number of pendulums in each row will depend on the linear dimensions of the area to be protected; if the area to be protected has a linear dimension Dlin, then the number of inverted pendulums, PR, in each row, NPRpf, will be given by NPRpf=Dlin/a1. The total number of pendulums PR will be, in this case, Nf x NPRpf= 16 E Dlin/$\lambda^2$.

Such parameters may nevertheless be changed according to specific requirements and studies about local wave properties.

As aforesaid, the waves in the Mediterranean Sea have a characteristic frequency that normally exceeds 0.1 Hz. Merely by way of example, let us assume that it is necessary to protect a coastal area having an extension of 100 m characterized by waves having a typical frequency FREQond of 0.2 Hz, i.e. a period T=1/FREQonde of 5 seconds; according to the relationship

$$\lambda = gT^2/(2\pi),$$

said frequency corresponds to a wavelength $\lambda$ of approximately 40 m.

In this case, in order to attenuate the waves, a grid RET formed by a number of rows Nf=8 parallel to the coast will be arranged; each row will be composed of 10 pendulums PR disposed at an indicative distance of $\lambda$/4=10 metres from each other. The distance between the rows will be approximately 10 metres, i.e. $\lambda$/4.

The grid RET will thus consist of 80 immersed pendulums PR and will occupy an area of 100 m x 50 m. Note that, with such a configuration, waves shorter than 40 metres will also be attenuated.

As concerns the size of each inverted pendulum PR, it has been estimated that a diameter of approx. 1.5 metres may suffice to attenuate the waves.

Each inverted pendulum can be easily built by using rigid, non-deformable plastic materials anchored to the bottom through a chain constrained to a weight, also known as dead weight.

As previously explained, the oscillation frequency of the inverted pendulum depends on the mass of the pendulum itself; therefore, it is envisaged to manufacture hollow spheres equipped with a valve that allows changing the mass of the sphere by simply varying the level of the water therein, and with a second valve for venting the air while filling or for injecting compressed air for *in situ* adjustment of the filling level of the masses.

Such a solution turns out to be very advantageous also during production, in that it is not necessary to manufacture inverted pendulums having different masses.

In one embodiment, an automatic filling and draining mechanism can adjust the quantity of liquid LQ within the masses M according to the conditions of the sea or other conditions detected by sensors within the basin or container. In one embodiment, the length of the rope C can be controlled automatically by means of pressure sensors arranged on the masses M, so as to keep the inverted pendulum PR immersed at the correct depth H.

In one embodiment, the masses M can transmit their state of motion, by means of accelerometers and a radio transmission system, to a control system to allow for historical and real-time analysis of the status and operation of the system SIS. In one embodiment, the status of the system SIS can be transmitted, as an analogue or digital signal, to a local or remote control room or a local or remote control system through a system of wires running from the mass M along the rope C, and then along the bottom or another part of the basin or container, up to a control unit or another signal collection and/or digitalization system, from which the system status is transmitted to the control room or system. In one embodiment, an automatic control system uses the status data received from the system SIS to adjust, according to suitable numerical algorithms, the length L of the rope C and/or the level of liquid within the masses M in order to optimize the wave damping efficiency in real time.

In one embodiment, the data transmitted from the system SIS can be used in order to diagnose any malfunctions and/or collisions with vessels.

A second important aspect relates to the fact that waves in nature or within a container do not have a privileged direction DIR, and it is therefore necessary for the system to be able to damp any waves, whatever the direction they come from.

In this regard, the proposed system offers the advantage that the damping efficiency does not depend much on the spacing as viewed from the waves and on the direction thereof, and is therefore suitable for absorbing multi-directional waves.

At the Fluid Dynamics Laboratory of the Department of Physics, a model of a grid RET of "inverted pendulums" PR has been successfully built and tested within a tank having a size of 2 m by 50 cm and containing 17 cm deep water.

In the system model taken into consideration, the waves are generated by a mechanical generator GM.

The spherical masses M employed for making each inverted pendulum PR have a diameter of 4 cm and are placed at a height of 15 cm from the bottom of the tank (3 cm from the surface).

It has been demonstrated that, when using the experimental apparatus, the waves generated at a given frequency are almost completely absorbed by the first oscillators PR in the grid RET.

The scalability of the system for coastal applications must take into account several variables.

At this point, it becomes important to verify that the effect experimentally observed in laboratory can be scaled and applied to real conditions.

As aforementioned, in first approximation, the oscillation frequency FREQ of the pendulum PR depends on the length L of the cable or chain C, and therefore on the depth H at which the device is to be inserted (it should be reminded that the device must be slightly under the free surface SL when the water is in the undisturbed condition, i.e. in the absence of waves).

More in detail, the oscillation frequency FREQ is inversely proportional to the square root of the length L of the anchorage cable or chain C.

The oscillation frequency FREQ also depends on the acceleration ACC to which the spherical mass M is subjected, which is given by the difference between the weight force FP of the spherical mass M and Archimedes' thrust SA, divided by the mass m of the spherical mass M.

In the proposed model, the dynamic effects must then be taken into account.

Having set a certain depth P and the type of fluid or liquid LQ (the density of which is therefore known), the parameters that can be adjusted in order to change the oscillation frequency FREQ are the mass m of the spherical mass M (and hence the material that the spherical mass M is made of or filled with) and its radius R.

By appropriately selecting these parameters, it is therefore possible to make the oscillation frequencies FREQ of the device DIS comparable to the wave frequencies FREQonde.

In the Mediterranean Sea, the waves have a mean oscillation period of approximately 5 seconds.

Thus, according to these hypotheses, a device oscillating at a frequency of approx. 1/5 Hz could be easily created by considering a spherical mass M having a radius of approx. 1 metre anchored at a depth of approximately 15 metres.

Such a device DIS can be easily manufactured by using common materials available on the market.

The oscillation period of the device is a function of the depth P at which it is anchored, considering a spherical mass M having a mass m of 50 kg and a radius R of 1 metre. Similar graphs can be obtained for different masses and different radii of the sphere S.

Therefore, this confirms the fact that the system is perfectly scalable to fulfil local requirements.

The innovative features of the proposed device and system are the following:

1) It is a submerged device, having no visual impact and a low environmental impact.

2) The device can potentially absorb waves characterized by multiple frequencies.

3) The device absorbs energy from the waves regardless of the direction of propagation thereof.

4) Despite its considerable benefits, the device has very low production costs.

5) The device is easy to install: in fact, it only requires anchoring the spherical masses.

6) The device requires minimal maintenance because it has no complex mechanical parts.

The main areas of application are:

1) Protection of coasts from wave-induced erosion.

2) Protection of harbours and harbour access areas.

3) Safe ground and sea transportation of liquids.

4) Industrial applications.

Of course, without prejudice to the principle of the invention, the embodiments and the implementation details may be extensively varied from those described and illustrated herein merely by way of non-limiting example, without however departing from the protection scope of the present invention as set out in the appended claims.

**Claims**

1. Multi-directional wave attenuator device comprising a square grid of inverted pendulums (PR, $PR_1$, $PR_2$, $PR_3$, $PR_4$...) immersed in a fluid or liquid (LQ), wherein each inverted pendulum (PR, $PR_1$, $PR_2$, $PR_3$, $PR_4$...) of the grid ends into a spherical mass (M) having a radius (R) and is anchored to the seabed (F) through a retaining system (C) at a depth (L), wherein the spherical mass (M) has a lower density than the fluid or liquid (LQ), so that the retaining system (C) is constantly under tension, and wherein said inverted pendulums (PR, $PR_1$, $PR_2$, $PR_3$, $PR_4$...) are arranged to form said grid so as to create a resonance phenomenon that will damp said waves, and the distances between the pendulums (a) correspond to one fourth of the most likely wavelength of the waves in the area where said pendulums are positioned ($\lambda/4$), **characterised in that** said mass (M), said radius (R) and said depth (L) of said inverted pendulums are selected in such a way that the natural oscillation frequency (FREQ) of the pendulum corresponds to the frequency of said waves (FREQonde), and **in that** the natural oscillation frequency (FREQ) of the spherical mass (M) can be varied by changing the mean density of the spherical mass (M).

2. Attenuator device according to claim 1, wherein the distances (a) between and dimensions (R) of the inverted pendulums (PR, $PR_1$, $PR_2$, $PR_3$, $PR_4$...) are equal throughout the grid.

3. Attenuator device according to one or more of the preceding claims, wherein said spherical mass (M) is a sphere made of a material having a mean density which is lower than the density of the fluid or liquid (LQ) in which it is immersed, and is wholly or partially hollow and contains air, and said retaining system (C) is anchored to the seabed by means of a fixed or movable anchorage system.

4. Attenuator device according to claim 3, wherein said anchorage system comprises a system for winding the retaining system (C), which allows controlling the actual length (L) of the retaining system (C).

5. Attenuator device according to claim 1, wherein said mean density of the spherical mass (M) is varied by means of one or more valves arranged on the spherical mass (M), wherein said valves allow varying the mass of the spherical mass (M) simply by varying the level of the water within the spherical mass (M).

6. Attenuator device according to one or more of the preceding claims, wherein the natural oscillation frequency (FREQ) of the single spherical mass (M) is varied by further changing the depth (L) at which the spherical mass (M) is anchored.

7. Attenuator device according to one or more of the preceding claims, wherein waves with different frequencies are attenuated by changing

- the distances between the inverted pendulums (PR, $PR_1$, $PR_2$, $PR_3$, $PR_4$) within the grid,
- by alternating, in the grid (RET) of inverted pendulums, spherical masses (M) of different density (M1, M2, M3) or different size (M10, M20, M30), so as to vary the resonance frequency and be able to absorb a wider range of frequencies.

8. Attenuator device according to one or more of the preceding claims, wherein, given an extension (E) of the system in the direction perpendicular to the coastline:

   - the number of rows of inverted pendulums is $Nf=E/(\lambda/4)$, where $\lambda$ is the most likely wavelength of the waves in the area where said pendulums are positioned,
   - the number of pendulums in each row NPRpf is given by $NPRpf=Dlin/a1$, where Dlin is the linear dimension of the area to be protected and a1 is the distance between pendulums.

**Patentansprüche**

1. Multidirektionale Wellendämpfungsvorrichtung umfassend ein quadratisches Gitter aus invertierten Pendeln ($PR$, $PR_1$, $PR_2$, $PR_3$, $PR_4$...), die in einem Fluid oder einer Flüssigkeit (LQ) eingetaucht sind, wobei jedes invertierte Pendel ($PR$, $PR_1$, $PR_2$, $PR_3$, $PR_4$...) des Gitters in einer kugelförmigen Masse (M), die einen Radius (R) aufweist, endet und mit dem Meeresboden (F) durch ein Rückhaltesystem (C) bei einer Tiefe (L) verankert ist, wobei die kugelförmige Masse (M) eine geringere Dichte als das Fluid oder die Flüssigkeit (LQ) aufweist, so dass das Rückhaltesystem (C) konstant unter Spannung steht und wobei die invertierten Pendel ($PR$, $PR_1$, $PR_2$, $PR_3$, $PR_4$...) angeordnet sind, um das Gitter zu bilden, um so ein Resonanzphänomen zu erzeugen, das die Wellen dämpft, und die Abstände zwischen den Pendeln (a) einem Viertel von der wahrscheinlichsten Wellenlänge der Wellen in dem Bereich, in dem die Pendel positioniert sind, ($\lambda/4$) entsprechen, **dadurch gekennzeichnet, dass** die Masse (M), der Radius (R) und die Tiefe (L) der invertierten Pendel in solch einer Weise gewählt sind, dass die natürliche Oszillationsfrequenz (FREQ) des Pendels mit der Frequenz der Wellen (FREQonde) übereinstimmt und dadurch, dass die natürliche Oszillationsfrequenz (FREQ) der kugelförmigen Masse (M) durch Ändern der mittleren Dichte der kugelförmigen Masse (M) variiert werden kann.

2. Dämpfungsvorrichtung nach Anspruch 1, wobei die Abstände (a) zwischen den und Abmessungen (R) der invertierten Pendel ($PR$, $PR_1$, $PR_2$, $PR_3$, $PR_4$...) gleich über das gesamte Gitter sind.

3. Dämpfungsvorrichtung nach einem oder mehreren der vorhergehenden Ansprüche, wobei die kugelförmige Masse (M) eine Kugel ist, die aus einem Material hergestellt ist, das eine mittlere Dichte aufweist, die geringer als die Dichte des Fluides oder der Flüssigkeit (LQ) ist, in der sie eingetaucht ist und ganz oder teilweise hohl ist und Luft umfasst und das Rückhaltesystem (C) mit dem Meeresboden mittels eines fixierten oder beweglichen Ankersystems verankert ist.

4. Dämpfungsvorrichtung nach Anspruch 3, wobei das Ankersystem ein System zum Aufwickeln des Rückhaltesystems (C) aufweist, welches ein Steuern der aktuellen Länge des Rückhaltesystems (C) erlaubt.

5. Dämpfungsvorrichtung nach Anspruch 1, wobei die mittlere Dichte der kugelförmigen Masse (M) mittels eines oder mehrerer Ventile variierbar ist, die auf der kugelförmigen Masse (M) angeordnet sind, wobei die Ventile ein Variieren der Masse der kugelförmigen Masse (M) durch einfaches Variieren des Wasserstands des Wassers innerhalb der kugelförmigen Masse (M) erlauben.

6. Dämpfungsvorrichtung nach einem oder mehreren der vorhergehenden Ansprüche, wobei die natürliche Oszillationsfrequenz (FREQ) der einzelnen kugelförmigen Masse (M) variierbar ist durch weiteres Ändern der Tiefe (L), bei der die kugelförmige Masse (M) verankert ist.

7. Dämpfungsvorrichtung nach einem oder mehreren der vorhergehenden Ansprüche, wobei Wellen mit unterschiedlichen Frequenzen gedämpft werden durch Änderung

   - der Abstände zwischen den invertierten Pendeln ($PR$, $PR_1$, $PR_2$, $PR_3$, $PR_4$) innerhalb des Gitters,
   - durch Wechseln der kugelförmigen Massen (M) mit unterschiedlichen Dichten (M1, M2, M3) oder unterschiedlichen Größen (M10, M20, M30) im Gitter (RET) von invertierten Pendeln, um so die Resonanzfrequenz zu ändern und einen größeren Frequenzbereich absorbieren zu können.

8. Dämpfungsvorrichtung nach einem oder mehreren der vorhergehenden Ansprüche, wobei bei einer gegebenen Ausdehnung (E) des Systems in der Richtung senkrecht zu der Küstenlinie:

   - die Anzahl der Reihen von invertierten Pendeln $Nf=E/(\lambda/4)$ ist, wobei $\lambda$ die wahrscheinlichste Wellenlänge der Wellen im Bereich, in dem die Pendel positioniert sind, ist,
   - die Anzahl der Pendel in jeder Reihe NPRpf durch $NPRpf=Dlin/a1$ gegeben ist, wobei Dlin die lineare Abmessung des zu schützenden Bereich ist und a1 der Abstand zwischen Pendeln ist.

## Revendications

1. Dispositif atténuateur de vagues multi-directionnelles comprenant un réseau carré de pendules inversés (PR, $PR_1$, $PR_2$, $PR_3$, $PR_4$...) immergés dans un fluide ou liquide (LQ), chaque pendule inversé (PR, $PR_1$, $PR_2$, $PR_3$, $PR_4$...) du réseau se terminant par une masse sphérique (M) ayant un rayon (R) et étant ancré au fond marin (F) par l'intermédiaire d'un système de retenue (C) à une profondeur (L), la masse sphérique (M) ayant une densité inférieure à celle du fluide ou liquide (LQ), de telle sorte que le système de retenue (C) est constamment sous tension, et lesdits pendules inversés (PR, $PR_1$, $PR_2$, $PR_3$, $PR_4$...) étant agencés pour former ledit réseau de façon à créer un phénomène de résonance qui amortira lesdites vagues, et les distances entre les pendules (a) correspondant à un quart de la longueur d'onde la plus probable des vagues dans la zone où lesdits pendules sont positionnés ($\lambda/4$), **caractérisé par le fait que** ladite masse (M), ledit rayon (R) et ladite profondeur (L) desdits pendules inversés sont choisis d'une manière telle que la fréquence d'oscillation naturelle (FREQ) du pendule correspond à la fréquence desdites vagues (FREQonde), et **par le fait que** la fréquence d'oscillation naturelle (FREQ) de la masse sphérique (M) peut être modifiée par changement de la densité moyenne de la masse sphérique (M).

2. Dispositif atténuateur selon la revendication 1, dans lequel les distances (a) entre et les dimensions (R) des pendules inversés (PR, $PR_1$, $PR_2$, $PR_3$, $PR_4$...) sont égales sur l'ensemble du réseau.

3. Dispositif atténuateur selon une ou plusieurs des revendications précédentes, dans lequel ladite masse sphérique (M) est une sphère faite d'un matériau ayant une densité moyenne qui est inférieure à la densité du fluide ou liquide (LQ) dans lequel elle est immergée, et est entièrement ou partiellement creuse et contient de l'air, et ledit système de retenue (C) est ancré au fond marin au moyen d'un système d'ancrage fixe ou mobile.

4. Dispositif atténuateur selon la revendication 3, dans lequel ledit système d'ancrage comprend un système pour enrouler le système de retenue (C), ce qui permet de contrôler la longueur (L) réelle du système de retenue (C).

5. Dispositif atténuateur selon la revendication 1, dans lequel ladite densité moyenne de la masse sphérique (M) est modifiée au moyen d'une ou plusieurs vannes disposées sur la masse sphérique (M), lesdites vannes permettant de modifier la masse de la masse sphérique (M) simplement par modification du niveau de l'eau à l'intérieur de la masse sphérique (M).

6. Dispositif atténuateur selon une ou plusieurs des revendications précédentes, dans lequel la fréquence d'oscillation naturelle (FREQ) de la masse sphérique seule (M) est modifiée par changement en outre de la profondeur (L) à laquelle la masse sphérique (M) est ancrée.

7. Dispositif atténuateur selon une ou plusieurs des revendications précédentes, dans lequel des vagues ayant différentes fréquences sont atténuées :

   - par changement des distances entre les pendules inversés (PR, $PR_1$, $PR_2$, $PR_3$, $PR_4$...) à l'intérieur du réseau,
   - par alternance, dans le réseau (RET) de pendules inversés, de masses sphériques (M) de densité différente (M1, M2, M3) ou de taille différente (M10, M20, M30), de façon à modifier la fréquence de résonance et à être capable d'absorber une plage plus large de fréquences.

8. Dispositif atténuateur selon une ou plusieurs des revendications précédentes, dans lequel, étant donné une extension (E) du système dans la direction perpendiculaire au littoral :

   - le nombre de rangées de pendules inversés est Nf=E/($\lambda$/4), $\lambda$ étant la longueur d'onde la plus probable des vagues dans la zone où lesdits pendules sont positionnés,
   - le nombre de pendules dans chaque rangée NPRpf est donné par NPRpf=Dlin/a1, Dlin étant la dimension linéaire de la zone à protéger et a1 étant la distance entre des pendules.

**FIG. 1**

**FIG. 2**

*FIG. 3*

FIG. 4

FIG. 5

FIG. 6

FIG. 7

EP 3 594 488 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3628334 A
- US 6102616 A
- US 3188813 A
- US 4712944 A
- US 4048802 A
- US 4264233 A
- US 4130994 A
- US 3022632 A
- WO 2013029012 A
- US 3487645 A
- US 6229225 B
- US 6392314 B
- US 20030193197 A
- WO 2010082033 A
- US 7042112 B2